# EUROPÄISCHE PATENTSCHRIFT

(11) **EP 1 795 351 B1**
(45) Veröffentlichungstag und Bekanntmachung des Hinweises auf die Patenterteilung: **31.08.2011**
(21) Anmeldenummer: 07006113.0
(22) Anmeldetag: 17.12.2002
(51) Int. Cl.: G01N 21/86, B41F 33/00

(54) **Wertpapierdruckmaschine mit einer Vorrichtung zur Kontrolle von mit Wertnoten bedruckten Bogen**
Printing machine for value paper comprising a device for controlling the printed sheets of value paper
Machine d'impression pour papiers-valeurs imprimés avec un dispositif destiné au contrôle de feuilles de papiers-valeurs imprimés

(30) Priorität: 18.12.2001 DE 10162340; 18.04.2002 DE 10217403
(43) Veröffentlichungstag der Anmeldung: 13.06.2007
(62) Teilanmeldung aus: 02791636.0
(73) Patentinhaber: KBA-NotaSys SA, 1000 Lausanne 22 (CH)
(72) Erfinder: Schaede, Johannes Georg, 97074 Würzburg (DE)
(74) Vertreter: Ganguillet, Cyril

(56) Entgegenhaltungen:
- WO-A-97/10670
- US-A- 3 317 738
- US-A- 4 233 663
- US-A- 4 254 643
- US-A- 4 259 591

## Beschreibung

Die Erfindung betrifft eine Wertpapierdruckmaschine mit einer Vorrichtung zur Kontrolle von mit Wertnoten bedruckten Bogen.

Aus der DE 29 44 322 A1 und der US 30 28 502 A sind derartige Vorrichtungen bekannt.

Bei der in der US 30 28 502 A beschriebenen Vorrichtung wird das zu kontrollierende Material auf einer transparenten Trommel aufgespannt und kann durch entsprechende Rotation der Trommel an einer Sensoreinrichtung vorbeigeführt werden. Die Sensoreinrichtung ist dabei innerhalb der Trommel angeordnet und kann mittels eines verfahrbaren Schlittens in Richtung der Längsachse der Trommel verfahren werden. Außerhalb der Trommel ist der Sensoreinrichtung gegenüber liegend eine Beleuchtungseinrichtung angeordnet, die synchron zur Verstellung der Sensoreinrichtung verfahrbar ist. Durch Betrieb der Beleuchtungseinrichtung kann das auf dem Material aufgedruckte Druckbild ausgeleuchtet werden, wobei aufgrund der transparenten Eigenschaften der Trommel die innerhalb der Trommel angeordnete Sensoreinrichtung ein entsprechend dem Druckbild veränderliches Eingangssignal erhält.

Bei der in der DE 29 44 322 A1 beschriebenen Vorrichtung sind innerhalb einer lichtdurchlässigen Hohlwalze lichtoptische Sensoren angeordnet. Außerhalb der Hohlwalze sind den Lichtsensoren gegenüberliegend Lichtquellen oder eine sich über die gesamte Länge der Walze erstreckende Lichtquelle vorgesehen. Durch Beleuchtung des auf der Hohlwalze aufgespannten Druckerzeugnisses können in Abhängigkeit der aufgedruckten Farbdichte unterschiedliche Helligkeitswerte von den Lichtsensoren detektiert werden.

Aus der WO 01 85 586 A1 ist eine Vorrichtung zum Transport von bogenförmigem Material, insbesondere Wertnoten, bekannt. Damit das von einer Lichtquelle abgegebene Licht von außerhalb der Trommel unter Durchscheinung des Druckerzeugnisses zu einer innerhalb der Trommel angeordneten Sensoreinrichtung gelangen kann, weist die undurchsichtige Trommel entsprechend angeordnete Ausschnitte auf, so dass im Ergebnis nicht die gesamte Oberfläche kontrollierbar ist.

Die DE 43 31 965 A1 zeigt eine Vorrichtung zur Inspektion von Röntgenbildvorlagen, wobei die Lichtquelle innerhalb einer transparenten Trommel liegt.

US 4,233,663 beschreibt eine Vorrichtung zur Herstellung von Druckplatten mit einer transparenten Trommel zum Beleuchten eines Originals.

WO 97/10670 beschreibt einen Bildscanner mit einer röhrenförmigen Lichtquelle und einer zugeordneten CCD Sensoreinrichtung.

Der Erfindung liegt die Aufgabe zugrunde, eine Vorrichtung zur Kontrolle von Material zu schaffen.

Die Aufgabe wird erfindungsgemäß durch die Merkmale des Anspruches 1 gelöst.

Ein mit der Erfindung erzielbarer Vorteil besteht insbesondere darin, dass die außerhalb der aus transparentem Material gefertigten Trommel angeordnete Sensoreinrichtung einer weit geringeren Temperaturbelastung ausgesetzt ist. Denn aufgrund der Anordnung der Sensoreinrichtung außerhalb der Trommel ist eine ausreichende Kühlung der Sensoreinrichtung ohne weiteres möglich.

Ein Ausführungsbeispiel der Erfindung ist in den Zeichnungen dargestellt und wird im folgenden näher beschrieben.

Es zeigen:
- Fig. 1: eine Vorrichtung im Querschnitt;
- Fig. 2: die Vorrichtung gemäß Fig. 1 im Längsschnitt;
- Fig. 3: die Vorrichtung gemäß Fig. 1 bei Anordnung an einem Gegendruckzylinder in einer Druckmaschine.

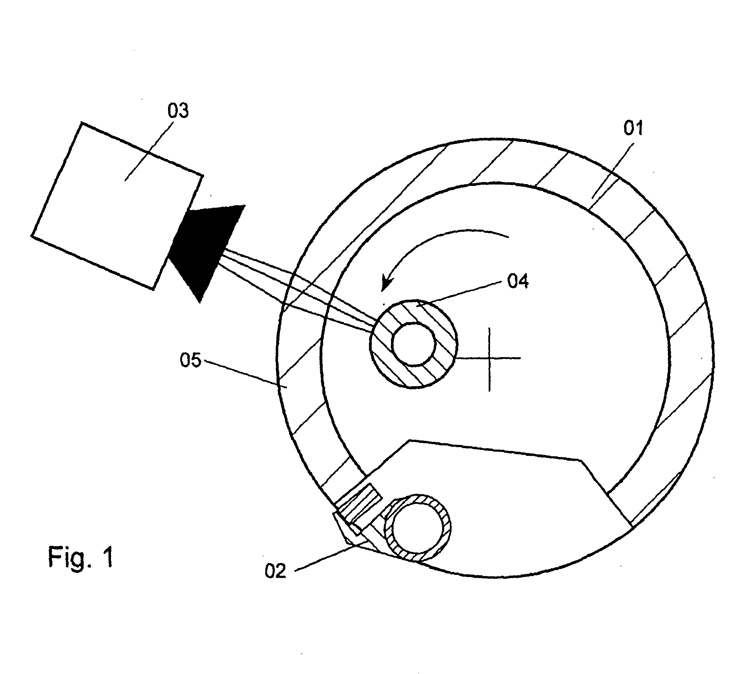

Die in Fig. 1 dargestellte Vorrichtung besteht im Wesentlichen aus einer transparenten Trommel 01 mit einer Halteeinrichtung 02, z. B. einem Greifer 02 und einer Sensoreinrichtung 03, beispielsweise einer CCD-Kamera 03, die außerhalb der Trommel 01 einer innerhalb der Trommel 01 angeordneten Beleuchtungseinrichtung 04 gegenüberliegend angeordnet ist.

Zur Kontrolle eines Materials 05, insbesondere zur Kontrolle von mit Wertnoten bedruckten Bogen, wird das Material 05 derart am Greifer 02 fixiert, dass durch rotatorischen Antrieb der Trommel 01 weitergefördert werden kann. Dabei umschlingt das Material 05 die Trommel 01 und liegt annähernd mit seiner gesamten Fläche auf der transparenten Trommel 01 auf.

Durch Einschalten der Beleuchtungseinrichtung 04 wird die transparente Trommel 01 und das darauf anliegende Material 05 von den Lichtstrahlen durchstrahlt, die anschließend ins Objektiv der Sensoreinrichtung 03 fallen. Je nach Druckbild auf dem Material 05 ändert sich dabei das von der Sensoreinrichtung 03 detektierte Eingangssignal, so dass durch eine entsprechend geeignete Auswerteeinheit das Druckbild auf dem Material 05 durch Auswertung der Ausgangssignale der Sensoreinrichtung 03 kontrolliert werden kann.

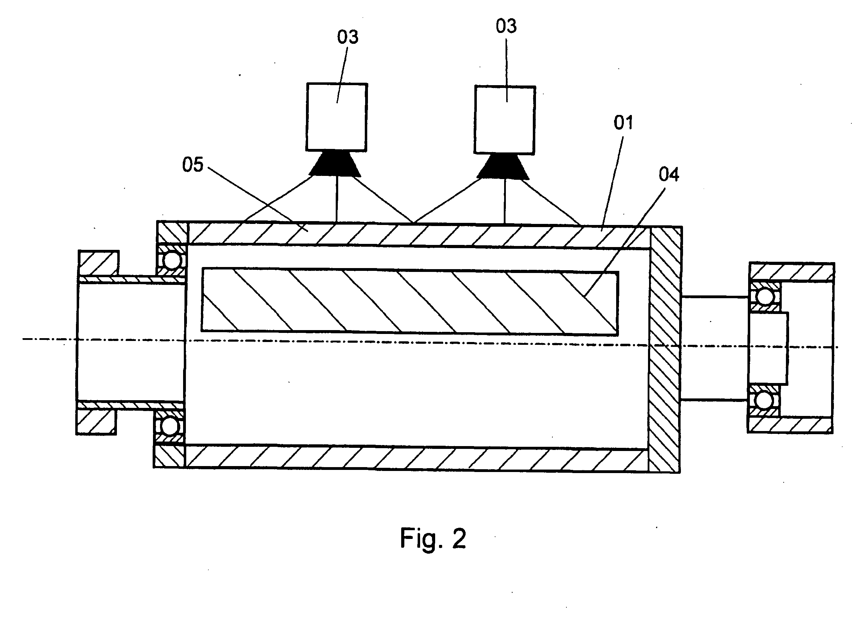

In Fig. 2 ist die Vorrichtung mit der Trommel 01, der Sensoreinrichtung 03, der Beleuchtungseinrichtung 04 und dem zu kontrollierenden Material 05 im Längsschnitt dargestellt. Man erkennt, dass die Trommel 01 an der einen Stirnseite geschlossen an der anderen offen ausgebildet ist, so dass in einfacher Weise eine ausreichende mechanische Stabilität der Trommel 01 gewährleistet werden kann, und außerdem die Beleuchtungseinrichtung 04 auf einfache Art in die Trommel 01 eingebracht und fixiert werden kann. Aufgrund der Anordnung der Sensoreinrichtung 03 außerhalb der Trommel 01 können die Sensoreinrichtungen 03, die bei dem dargestellten Ausführungsbeispiel von zwei nebeneinander angeordneten CCD-Kameras 09 gebildet ist, in einfacher Weise gekühlt werden.

Die Beleuchtungseinrichtung 04, die beispielsweise in der Art einer Leuchtröhre 04 ausgebildet sein kann, erstreckt sich im Wesentlichen über die gesamte Länge der Trommel 01, so dass das auf der Trommel 01 anliegende Material 05 in allen Bereichen ausgeleuchtet werden kann. Die Objektive der CCD-Kameras 03 sind dabei derart ausgebildet, dass jeweils die Hälfte der Länge der Trommel 01 erfasst wird.

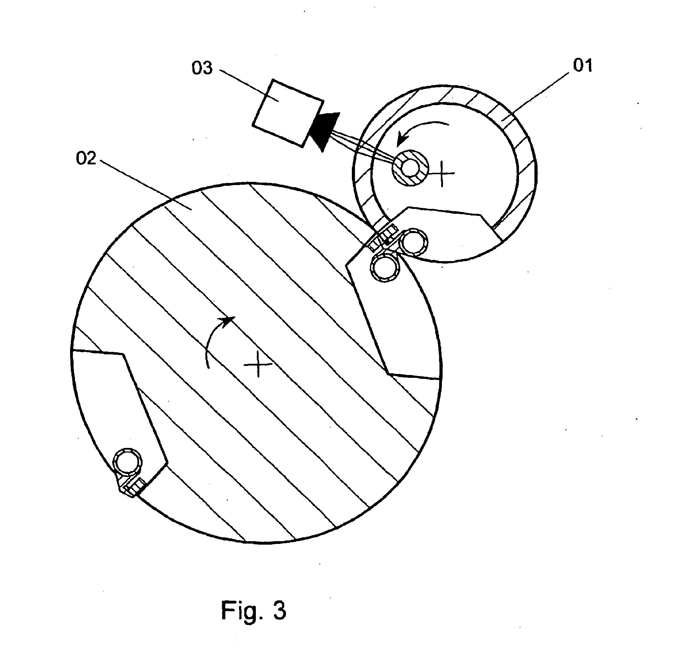

Fig. 3 stellt die Vorrichtung mit der Trommel 01 und der Sensoreinrichtung 03 bei Anordnung an einem Gegendruckzylinder 06 in einer Wertpapierdruckmaschine schematisch dar. Durch entsprechende Ausbildung der Greifer 02 an der Trommel 01 und dem Gegendruckzylinder 06 können die in der Druckmaschine bedruckten Wertnoten fortlaufend vom Gegendruckzylinder 06 auf die Trommel 01 übertragen und dort mittels der Sensoreinrichtung 03 kontrolliert werden.

### Bezugszeichenliste

- 01: Trommel, transparente
- 02: Halteeinrichtung, Greifer
- 03: Sensoreinrichtung, CCD-Kamara
- 04: Beleuchtungseinrichtung, Leuchtröhre
- 05: Material, zu kontrollierende
- 06: Gegendruckzylinder

## Patentansprüche

1. Westparesdruchmaschine zum Bedruchen von Bogen mit einer Vorrichtung zur Kontrolle von den mit Wertnoten bedruckten Bogen (05), mit einer Sensoreinrichtung (03) und einer Beleuchtungseinrichtung (04), wobei der zu kontrollierende Bogen (05) auf einer in der Wertpapierdruchmaschine angeordneten transparenten Trommel (01) geführt ist, wobei die Beleuchtungseinrichtung (04) auf einer Seite der Trommel (01) und die Sensoreinrichtung (03) auf der anderen Seite der Trommel (01) angeordnet ist, wobei die Beleuchtungseinrichtung (04) sich im wesentlichen über die gesamte Länge der Trommel (01) erstreckt, so dass der auf der Trommel (01) anliegende Bogen (05) in allen Bereichen ausgeleuchtet werden kann und wobei die Beleuchtungseinrichtung (04) und die zugehörige Sensoreinrichtung (03) ortsfest angeordnet sind,

2. Wertpapierdruchmaschine nach Anspruch 1, **dadurch gekennzeichnet, dass** die Beleuchtungseinrichtung (04) innerhalb der Peripherie der Trommel (01) und die zugehörige Sensoreinrichtung (03) ausserhalb der Peripherie der Trommel (01) angeordnet ist.

3. Wertpapierdruchmaschine nach einem der vorhergehenden Ansprüche, **dadurch gekennzeichnet, dass** der Bogen (05) annähernd mit seiner gesamten Fläche auf der transparenten Trommel (01) aufliegt.

4. Wertpapierdruchmaschine nach einem der vorhergehenden Ansprüche, **dadurch gekennzeichnet, dass** die Trommel (01) als rotierende Trommel (01) ausgebildet ist.

5. Wertpapierdruchmaschine nach einem der vorhergehenden Ansprüche, **dadurch gekennzeichnet, dass** die Sensoreinrichtung (03) als CCD-Kamera (3) ausgebildet ist.

6. Wertpapierdruchmaschine nach einem der vorhergehenden Ansprüche, **dadurch gekennzeichnet, dass** die Sensoreinrichtung (03) gekühlt ist.

7. Wertpapierdruchmaschine nach einem der vorhergehenden Ansprüche, **dadurch gekennzeichnet, dass** die Trommel (01) auf einer Stirnseite offen und auf der anderen Stirnseite geschlossen ausgebildet ist.

8. Wertpapierdruchmaschine nach einem der vorhergehenden Ansprüche, **dadurch gekennzeichnet, dass** die Beleuchtungseinrichtung (04) in der Art einer Leuchtröhre (04) ausgebildet ist.

## Claims

1. A securities printing machine for printing sheets, with a device for inspecting the sheets (05) printed with securities comprising a sensor device (03) and an illuminating device (04), the sheet (05) to be inspected being guided over a transparent drum (01) arranged in the securities printing machine, the illuminating device (04) being arranged on one side of the drum (01) and the sensor device (03) being arranged on the other side of the drum (01), the illuminating device (04) extending substantially over the entire length of the drum (01), such that the sheet (05) placed on the drum (01) may be illuminated in all regions, and the illuminating device (04) and the associated sensor device (03) being fixedly arranged.

2. A securities printing machine according to claim 1, **characterised in that** the illuminating device (04) is arranged inside the periphery of the drum (01) and the associated sensor device (03) is arranged outside the periphery of the drum (01).

3. A securities printing machine according to any one of the preceding claims, **characterised in that** the sheet (05) lies with approximately its entire surface on the transparent drum (01).

4. A securities printing machine according to any one of the preceding claims, **characterised in that** the drum (01) takes the form of a rotating drum (01).

5. A securities printing machine according to any one of the preceding claims, **characterised in that** the sensor device (03) takes the form of a CCD camera (3).

6. A securities printing machine according to any one of the preceding claims, **characterised in that** the sensor device (03) is cooled.

7. A securities printing machine according to any one of the preceding claims, **characterised in that** the drum (01) is open at one end face and closed at the other end face.

8. A securities printing machine according to any one of the preceding claims, **characterised in that** the illumination device (04) is configured in the manner of a fluorescent tube (04).

## Revendications

1. Machine d'impression de papiers valeurs destinée à imprimer des feuilles, avec un dispositif pour le contrôle des feuilles (05) imprimées avec des papiers valeurs comportant un dispositif à capteur (03) et un dispositif d'illumination (04), la feuille (05) à contrôler étant conduite sur un tambour transparent (01) disposé dans la machine d'impression de papiers valeurs, le dispositif d'illumination (04) étant disposé d'un côté du tambour (01) et le dispositif à capteur (03) étant disposé de l'autre côté du tambour (01), le dispositif d'illumination (04) s'étendant essentiellement sur toute la longueur du tambour (01), de telle sorte que la feuille (05) se trouvant sur le tambour (01) peut être éclairée dans toutes les zones et le dispositif d'illumination (04) et le dispositif à capteur associé (03) étant disposés de manière fixe.

2. Machine d'impression de papiers valeurs selon la revendication 1, **caractérisée en ce que** le dispositif d'illumination (04) est disposé à l'intérieur de la périphérie du tambour (01) et le dispositif à capteur associé (03) est disposé en dehors de la périphérie du tambour (01).

3. Machine d'impression de papiers valeurs selon l'une quelconque des revendications précédentes, **caractérisée en ce que** la feuille (05) repose quasiment avec toute sa surface sur le tambour transparent (01).

4. Machine d'impression de papiers valeurs selon l'une quelconque des revendications précédentes, **caractérisée en ce que** le tambour (01) est réalisé sous forme de tambour rotatif (01).

5. Machine d'impression de papiers valeurs selon l'une quelconque des revendications précédentes, **caractérisée en ce que** le dispositif à capteur (03) est réalisé sous forme de caméra CCD (3).

6. Machine d'impression de papiers valeurs selon l'une quelconque des revendications précédentes, **caractérisée en ce que** le dispositif à capteur (03) est refroidi.

7. Machine d'impression de papiers valeurs selon l'une quelconque des revendications précédentes, **caractérisée en ce que** le tambour (01) est réalisé ouvert sur une face frontale et fermé sur l'autre face frontale.

8. Machine d'impression de papiers valeurs selon l'une quelconque des revendications précédentes, **caractérisée en ce que** le dispositif d'illumination (04) est réalisé comme un tube fluorescent (04).
